(19) Europäisches Patentamt
European Patent Office
Office européen des brevets

(11) **EP 1 762 828 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(51) Int Cl.:
***G01D 5/38*** *(2006.01)*

(21) Anmeldenummer: **06018411.6**

(22) Anmeldetag: **02.09.2006**

(54) **Optische Positionsmesseinrichtung zur Erfassung der Position zweier zueinander beweglicher Teile in zwei Bewegungsrichtungen**

Optical encoder for determining the position of two parts that are movable relative to one another in two directions of movement

Codeur optique pour déterminer la position de deux parties deplaçable l'une par rapport à l'autre dans deux directions de déplacement

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.09.2005 DE 102005043569**

(43) Veröffentlichungstag der Anmeldung:
**14.03.2007 Patentblatt 2007/11**

(60) Teilanmeldung:
**13178929.9 / 2 660 566**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**EP-A1- 1 533 594      WO-A1-99/17073
JP-A- 2005 003 438**

EP 1 762 828 B1

**Beschreibung**

Die vorliegende Erfindung betrifft eine optische Positionsmesseinrichtung.

In Halbleiterfertigungseinrichtungen ist es erforderlich die räumliche Position bestimmter Teile, die zueinander beweglich sind, präzise mittels geeigneter Positionsmesseinrichtungen zu bestimmen. Über die Positionsinformationen ist dann eine rechnergesteuerte Ablaufsteuerung in diesen Einrichtungen möglich. So muss z.B. in Wafersteppern die Lage von Maske und Wafer in allen 6 Freiheitsgraden (6DOF) sehr genau gemessen werden. Bisher erfolgte diese Positionsmessung vorwiegend über mehrere Laserinterferometer. Zukünftig ist davon auszugehen, dass die Genauigkeitsanforderungen an die Positionsmessung bei gleichzeitig steigenden Verfahrgeschwindigkeiten der verschiedenen Teile weiter ansteigen. Während etwa bislang Genauigkeitsanforderungen von wenigen nm bei Geschwindigkeiten von ca. 1 m/s vorgegeben waren, ist zukünftig von Subnanometer-Genauigkeiten bei deutlich höheren Geschwindigkeiten auszugehen. Bei derartig hohen Genauigkeitsforderungen können jedoch keine Laserinterferometer als Positionsmesseinrichtungen mehr verwendet werden, da die Brechungsindexschwankungen in der umgebenden Luft auch bei optimalen Luftduschen zu Messwertschwankungen in der Positionsmessung von einigen nm führen.

Aus diesem Grund wurden bereits alternative Positionsmesseinrichtungen in derartigen Einrichtungen vorgeschlagen. So ist etwa aus der EP 1 019 669 B1 bekannt, optische Positionsmesseinrichtungen mit sog. Kreuzgittern als zweidimensionale Maßverkörperung einzusetzen. Derartige Systeme werden kaum von eventuellen Brechungsindexschwankungen der Luft beeinflusst und erlauben daher gut reproduzierbare Positionsmessungen.

Aus der Kreuzgitterabtastung lassen sich in derartigen Systemen i.w. die lateralen Freiheitsgrade X, Y, Rz erfassen (X: Translation entlang X-Achse; Y: Translation entlang Y-Achse; Rz: Rotation um Z-Achse); um alle möglichen sechs Freiheitsgrade, also auch die zusätzlichen Freiheitsgrade Z, Rx, Ry (Z: Translation entlang Z-Achse; Rx: Rotation um x-Achse; Ry: Rotation um y-Achse) messtechnisch zu erfassen, ist daher zusätzlich eine Positionsmessung in z-Richtung erforderlich. In der EP 1 019 669 B1 werden zu diesem Zweck zusätzliche Abstandsensoren vorgeschlagen, beispielsweise kapazitive oder berührende Messtaster. Derartige Abstandssensoren sind jedoch bei den geforderten Genauigkeiten nicht mehr ausreichend.

Alternativ könnten als Abstandssensoren, die die erforderliche Genauigkeit liefern, grds. auch Interferometer eingesetzt werden. Diese erfordern jedoch wiederum einen signifikanten Mehraufwand in Bezug auf Gehäuse, Signalverarbeitung, Signalkorrektur etc.. So ist es hierbei etwa schwierig, Luftduschen anzubringen, die einen laminaren Strömungsverlauf parallel oder senkrecht zum Kreuzgitter aufweisen. Derartige Luftduschen wären jedoch unabdingbar für eine ausreichende Interferometer-Messgenauigkeit an dieser Stelle. Problematisch ist zudem, die exakte zeitliche Synchronisation der Positionsmesswerte aus der Kreuzgitterabtastung und der interferometrischen Abstandsmessung zu bewerkstelligen.

Des weiteren sind gitterbasierte Positionsmesseinrichtungen bekannt, mittels denen auch eine Bestimmung des Abtastabstands zwischen zwei Gittern im

Abtaststrahlengang möglich ist. Beispielsweise sei in diesem Zusammenhang auf die EP 448 982 B1 verwiesen.

Aufgabe der vorliegenden Erfindung ist es, eine Positionsmesseinrichtung anzugeben, die es gestattet, mit möglichst geringem Aufwand gleichzeitig mindestens einen lateralen und einen vertikalen Freiheitsgrad zweier zueinander beweglicher Objekte an einem gemeinsamen Messort mit hoher Genauigkeit zu messen.

Dieses Problem wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen in den abhängigen Ansprüchen.

Erfindungsgemäß wird eine Positionsmesseinrichtung zur Erfassung der Position von zwei relativ zueinander beweglichen Objekten vorgeschlagen mit einer Maßverkörperung, die mit einem der beiden Objekte verbunden ist sowie mindestens einem Abtastsystem zur Abtastung der Maßverkörperung, die mit dem anderen der beiden Objekte verbunden ist. Das Abtastsystem ist derart ausgebildet, dass darüber eine gleichzeitige Positionswertbestimmung entlang mindestens einer lateralen als auch entlang einer vertikalen Verschiebungsrichtung der Objekte möglich ist.

Vorzugsweise ist auf Seiten des Abtastsystems zur Positionsbestimmung in lateraler und vertikaler Verschiebungsrichtung ein erster und ein zweiter Abtaststrahlengang ausgebildet. In diesen ist jeweils aus zwei interferierenden Teilstrahlenbündeln ausgangsseitig eine Gruppe phasenverschobener Signale erzeugbar.

In einer vorteilhaften Ausführungsform der Positionsmesseinrichtung verlaufen die beiden Teilstrahlenbündel jedes Abtaststrahlenganges asymmetrisch zu einer Ebene senkrecht zur lateralen Verschiebungsrichtung. Ferner verläuft der zweite Strahlengang spiegelsymmetrisch zum ersten Strahlengang bzgl. einer Ebene senkrecht zur lateralen Verschiebungsrichtung und die beiden Teilstrahlenbündel jedes Abtaststrahlenganges erfahren an der Maßverkörperung eine Beugung in unterschiedlichen Beugungsordnungen.

Vorzugsweise erfahren die beiden Teilstrahlenbündel jedes Abtaststrahlenganges an der Maßverkörperung eine Beugung in +.1 bzw. - 1. Beugungsordnung.

In einer möglichen Ausführungsform der Positionsmesseinrichtung sind ferner Auswertemittel vorgesehen, um aus interpolierten phasenverschobenen Signalen beider Gruppen primäre Positionswerte zu bestimmen, aus denen ein lateraler und ein vertikaler Positionswert ermittelbar ist.

Ferner können Kompensationsmittel vorgesehen sein, um eventuelle Interpolationsfehler derjenigen Positionswerte zu kompensieren, aus denen ein lateraler und ein vertikaler Positionswert ermittelbar ist.

In einer vorteilhaften Ausführungsform sind bei der erfindungsgemäßen Positionsmesseinrichtung in den jeweiligen Abtaststrahlengängen optische Mittel angeordnet, um jeweils gleiche optische Weglängen für die interferierenden Teilstrahlenbündel zu gewährleisten.

In einer möglichen Variante der erfindungsgemäßen Positionsmesseinrichtung umfasst die Maßverkörperung ein zweidimensionales Kreuzgitter und drei Abtastsysteme, die zueinander in nicht-kolinearer Anordnung stehen, um aus den verknüpften Positionswerten der drei Abtastsysteme die Bewegung der beiden Objekte in allen sechs räumlichen Freiheitsgraden zu erfassen.

Besonders geeignet ist die erfindungsgemäße Positionsmesseinrichtung zur Positionsbestimmung von Komponenten einer Halbleiterfertigungseinrichtung.

Weitere Vorteile sowie Einzelheiten der vorliegenden Erfindung ergeben sich aus der nachfolgenden Beschreibung der der Erfindung zugrunde liegenden Prinzipien sowie zweier konkreter Ausführungsbeispiele anhand der beiliegenden Figuren.

Es zeigen:

Figur 1     eine schematisierte Prinzipdarstellung einer gitterbasierten, interferentiellen Positionsmesseinrichtung;

Figur 2     eine schematisierte Darstellung einer Messanordnung zur messtechnischen Erfassung aller sechs Freiheitsgrade;

Figur 3     verschiedene Ansichten des Abtaststrahlenganges einer ersten Ausführungsform der erfindungsgemäßen Positionsmesseinrichtung;

Figur 4     eine schematisierte Darstellung, anhand der die Bestimmung des Empfindlichkeitsvektors des Beispiels aus Figur 3 erläutert wird;

Figur 5     den Abtaststrahlengang einer zweiten Ausführungsform der erfindungsgemäßen Positionsmesseinrichtung;

Figur 6     eine schematisierte Darstellung, anhand der die Bestimmung des Empfindlichkeitsvektors des Beispiels aus Figur 5 erläutert wird.

Bevor nachfolgend im Detail auf die zugrunde liegenden Prinzipien der vorliegenden Erfindung eingegangen wird, sei zunächst eine mathematische Beschreibung von interferentiellen Positionsmessgeräten mit als Gittern ausgebildeten Maßverkörperungen erläutert. Diese wird nachfolgend auch zur weiteren Beschreibung der vorliegenden Erfindung genutzt.

In gitterbasierten, interferentiellen Positionsmesseinrichtungen wird üblicherweise ein Strahlenbündel einer Lichtquelle in zwei (oder mehr) Teilstrahlenbündel aufgespalten. Die Teilstrahlenbündel werden durch Beugung an einem Maßverkörperungsgitter unterschiedlich in ihrer Phase verschoben und schließlich wieder zur Interferenz gebracht. Die durchlaufenen optischen Weglängen beider Teilstrahlenbündel sollen dabei möglichst gleich lang sein. Dadurch werden die Positionswerte unabhängig von der Wellenlänge der Lichtquelle gemacht. Die Strahlengänge hochauflösender Positionsmesseinrichtungen werden deshalb üblicherweise symmetrisch zu einer Ebene (YZ) senkrecht zur Messrichtung (X) gewählt. Die gitterbasierten, interferentiellen Positionsmesseinrichtungen werden dadurch auch unabhängig gegenüber Abstandsänderungen (Z) zwischen Abtastsystem und Maßverkörperung, was grundsätzlich eine gewünschte Eigenschaft ist.

Um die vorliegende Erfindung vom Grundprinzip bisheriger gitterbasierter, interferentieller Positionsmesseinrichtungen präzise abgrenzen zu können, muss man die Wechselwirkung (Gitterbeugung kombiniert mit Transmission bzw. Reflexion) der beiden Teilstrahlenbündel mit dem Gitter der Maßverkörperung genauer beleuchten: Bei jeder Wechselwirkung werden die k-Vektoren der Teilstrahlenbündel folgendermaßen verändert:

$$\Delta \vec{k}_n = \vec{k}_{n,out} - \vec{k}_{n,in} \text{ (erstes Teilstrahlenbündel) bzw.}$$

$$\Delta\vec{k}'_n = \vec{k}'_{n,out} - \vec{k}'_{n,in} \quad \text{(zweites Teilstrahlenbündel)}$$

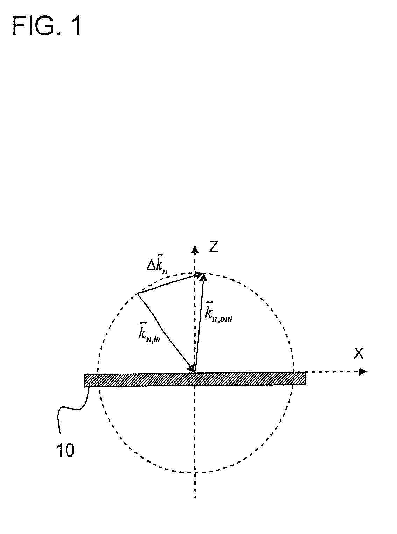

Hierbei nummeriert n jeweils die Wechselwirkungen der Teilstrahlenbündel mit der Maßverkörperung. Wie etwa aus der Prinzipdarstellung in Figur 1 hervorgeht, resultieren üblicherweise zumeist ein oder zwei derartige Wechselwirkungen mit der Maßverkörperung 10. Die Phasenverschiebungen $\Delta\Phi_n$ für das erste Teilstrahlenbündel bzw. $\Delta\Phi'_n$ für das zweite Teilstrahlenbündel durch die n-te Wechselwirkung mit der Maßverkörperung 10 sind dann durch die Gleichungen

$$\Delta\Phi_n = -\Delta\vec{k}_n \cdot \Delta\vec{x}_M \quad \text{(erstes Teilstrahlenbündel) bzw.}$$

$$\Delta\Phi_n' = -\Delta\vec{k}'_n \cdot \Delta\vec{x}_M \quad \text{(zweites Teilstrahlenbündel)}$$

gegeben, wenn $\Delta\vec{x}_M$ die Positionsverschiebung der Maßverkörperung 10 bezeichnet. Die Phasenverschiebung der beiden Teilstrahlenbündel am Ort der Interferenz ergibt den angezeigten Positionswert $\xi$ der entsprechenden Positionsmesseinrichtung gemäß

$$\xi = \frac{SP}{2\pi}\sum_n(\Delta\Phi_n - \Delta\Phi'_n) = -\frac{SP}{2\pi}\sum_n(\Delta\vec{k}_n - \Delta\vec{k}'_n) \cdot \Delta\vec{x}_M$$

Mit:

SP := Signalperiode der Positionsmesseinrichtung
$\Delta\vec{x}_M$ := Position der Maßverkörperung

Derart lässt sich nunmehr ein Empfindlichkeitsvektor $\vec{a}$ definieren, der die lineare Änderung des Positionswerts mit der Verschiebung $\Delta\vec{x}_M$ der Maßverkörperung beschreibt:

$$\xi = \vec{a} \cdot \Delta\vec{x}_M \,,$$

mit

$$\vec{a} = -\frac{SP}{2\pi}\sum_n(\Delta\vec{k}_n - \Delta\vec{k}'_n)\,.$$

Durch den erwähnten, symmetrischen Aufbau bisheriger hochauflösender gitterbasierter, interferentieller Positionsmesseinrichtungen ist $\Delta\vec{k}'_n$ stets spiegelsymmetrisch (bzgl. YZ-Ebene) zu $\Delta\vec{k}_n$ und der Empfindlichkeitsvektor $\vec{a}$ liegt folglich parallel zur Ebene der Maßverkörperung 10. Dies ist natürlich beabsichtigt, da nur entlang der Maßverkörperungsebene gemessen werden soll. Eine reine Abstandsänderung $\Delta\vec{x}_M = \Delta z \cdot \vec{e}_z$ der Maßverkörperung 10 relativ zur Abtasteinheit führt zu keiner Positionswertänderung.
Erfindungsgemäß wird nunmehr eine Positionsmesseinrichtung mit Abtastsystemen vorgeschlagen, die gleichzeitig mindestens eine laterale Position (X, Y) und einen vertikalen Abstand (Z) messen. Durch Verknüpfung von Positionswerten mindestens dreier solcher Abtastsysteme, die die Maßverkörperung an drei verschiedenen, nicht kolinear liegenden Orten abtasten und die in mindestens zwei unterschiedlichen, lateralen Mess- bzw. Verschiebungsrichtungen (X, Y) ausgerichtet sind, können alle sechs Freiheitsgrade bestimmt werden.

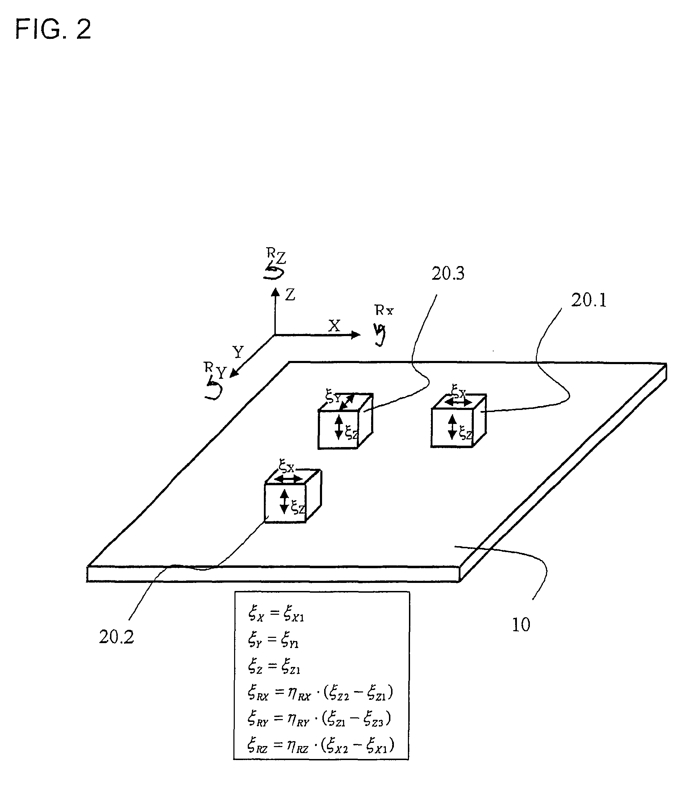

Ein Beispiel einer solchen Anordnung ist in Figur 2 inklusive einiger relevanter Größen gezeigt. Die ausgegebenen Positionswerte $\xi_X$, $\xi_Y$, $\xi_Z$, $\xi_{RX}$, $\xi_{RY}$, $\xi_{RZ}$ (sog. tertiäre Positionswerte) werden aus einer geeigneten Linearkombination sekundärer Positionswerte $\xi_{X1}$, $\xi_{X2}$, $\xi_{Y1}$, $\xi_{Z1}$, $\xi_{Z2}$, $\xi_{Z3}$ berechnet, die die einzelnen Abtastsysteme 20.1, 20.2, 20.3 zunächst liefern. Jedes Abtastsystem 20.1, 20.2, 20.3 bestimmt vorteilhafterweise genau einen lateralen ($\xi_X$ oder $\xi_Y$) und genau einen vertikalen ($\xi_Z$), sekundären Positionswert.

Erfindungsgemäß werden in jedem einzelnen Abtastsystem 20.1, 20.2, 20.3 jeweils zwei Paare von Teilstrahlenbündein erzeugt, die mindestens einmal an der Maßverkörperung 10 gebeugt werden und dann jeweils zur Interferenz gebracht werden. Im Folgenden wird angenommen, dass die laterale Messrichtung parallel zur X-Richtung liegt. Die unten mehrmals erwähnte Spiegelsymmetrie bezieht sich dann auf die YZ-Ebene. Selbstverständlich können die untenstehenden Ausführungen analog auch auf eine andere laterale Messrichtung (z.B. Y) übertragen werden.

Durch die beiden Paare interferierender Teilstrahlenbündel entstehen zwei Gruppen von Signalen, wobei jede Gruppe in bekannter Weise aus mehreren zueinander phasenverschobenen Signalen besteht.

Der Strahlenverlauf der beiden interferierenden Teilstrahlenbündel des ersten Paars wird erfindungsgemäß nicht spiegelsymmetrisch gewählt. Daraus resultiert im Allgemeinen ein Empfindlichkeitsvektor $\vec{a}_1$, der nicht mehr parallel zur X-Richtung und damit zur Maßverkörperungsfläche liegt, sondern in der XZ-Ebene in einem definierten Winkel $\alpha$ zur Maßverkörperungsfläche steht. Der Strahlenverlauf des zweiten Paars von interferierenden Teilstrahlenbündeln wird nun spiegelsymmetrisch zum Strahlenverlauf des ersten Paars gewählt. Der Empfindlichkeitsvektor $\vec{a}_2$ des zweiten Paars ist dann entsprechend spiegelsymmetrisch zu $\vec{a}_1$. Aus den beiden Gruppen phasenverschobener Signale lassen sich auf bekannte Art und Weise Positionswerte $\xi_1$, $\xi_2$ bestimmen, die hier als primäre Positionswerte bezeichnet werden. Sie können in erster Ordnung durch folgende Gleichungen und beschrieben werden:

$$\xi_1 = \vec{a}_1 \cdot \Delta \vec{x}_M$$

$$\xi_2 = \vec{a}_2 \cdot \Delta \vec{x}_M$$

Durch Addition und Subtraktion entstehen daraus sekundäre Positionswerte $\xi_{XS}$ und $\xi_{ZS}$, denen gemäß der folgenden Gleichungen entsprechende Empfindlichkeitsvektoren $\vec{a}_{XS}$, $\vec{a}_{ZS}$ zugeordnet werden können:

$$\xi_{XS} = \frac{1}{2}(\xi_1 - \xi_2) = \frac{1}{2}(\vec{a}_1 - \vec{a}_2) \cdot \Delta \vec{x}_M = \vec{a}_{XS} \cdot \Delta \vec{x}_M$$

$$\xi_{ZS} = \frac{1}{2}(\xi_1 + \xi_2) = \frac{1}{2}(\vec{a}_1 + \vec{a}_2) \cdot \Delta \vec{x}_M = \vec{a}_{ZS} \cdot \Delta \vec{x}_M$$

Aufgrund der Spiegelsymmetrie liegt der Empfindlichkeitsvektor $\vec{a}_{XS}$ stets parallel zur Maßverkörperungsfläche und entlang der ersten Messrichtung X. Dagegen steht der Empfindlichkeitsvektor $\vec{a}_{ZS}$ immer senkrecht zur Maßverkörperungsfläche und damit parallel zur Z-Richtung. Das einzelne Abtastsystem 20.1, 20.2, 20.3 liefert also genau einen lateralen und einen vertikalen Positionswert.

Eine genauere Analyse mit Einschluss von eventuell resultierenden Maßverkörperungskippungen zeigt, dass die (lateralen) XY-Pösitionen der effektiven Messpunkte für die beiden sekundären Positionswerte identisch sind. Die erfindungsgemäße, spiegelsymmetrische Anordnung stellt also sicher, dass beide Werte $\xi_{XS}$ und $\xi_{ZS}$ in einem gemeinsamen, zentralen XY-Punkte gemessen werden. Dabei liegt die X-Position natürlich auf der Symmetrieebene (YZ-Ebene) der Positionsmesseinrichtung. Ein gemeinsamer Messpunkt erleichtert die Kalibrierung der Positionsmesseinrichtungen bei der Inbetriebnahme, da die Zahl der freien Parameter (wie die Messpunktlagen aller Abtastungen) geringer ausfällt.

Interessant erweist sich auch die Wellenlängenabhängigkeit einer derartigen gitterbasierten, interferentiellen Positionsmesseinrichtung. So werden durch die Differenzbildung $\xi_{XS} = \frac{1}{2}(\xi_1 - \xi_2)$ zur Bildung des lateralen, sekundären Positionswertes die Phasenlagen der vier beteiligten Teilstrahlenbündel addiert bzw. subtrahiert. Jeweils zwei Teilstrahlenbündel haben dabei einen spiegelsymmetrischen Strahlenverlauf, d.h. ihre optischen Weglängen sind identisch. Bei genauer Betrachtung werden diese Phasenlagen der spiegelsymmetrischen Teilstrahlenbündel jeweils voneinander abgezogen, so dass sich die Phasenverschiebungen aufgrund der optischen Weglängen jeweils aufheben. Es verbleiben nur die Phasenverschiebungen aufgrund der Gitterbeugungen. Die resultierende Phasendifferenz entspricht daher der Phasendifferenz in einer herkömmlichen interferentiellen, gitterbasierten Positionsmesseinrichtung. Dies bedeutet, dass der laterale Positionswert $\xi_{XS}$ ebenfalls nicht mehr von der Wellenlänge abhängig ist. Der Unterschied liegt darin, dass bei einer herkömmlichen gitterbasierten Positionsmesseinrichtung bereits die beiden interferierenden Teilstrahlenbündel spiegelsymmetrisch sind und deren Phasenverschiebungen durch die Interferenzbildung direkt voneinander subtrahiert werden, während bei der vorliegenden Erfindung nicht spiegelsymmetrische Teilstrahlenbündel interferieren und erst durch die Verrechnung von zwei primären Positionswerten die Phasenverschiebungen spiegelsymmetrischer Teilstrahlenbündel in Differenz gebracht werden.

Die Wellenlängenunabhängigkeit des lateralen Positionswertes $\xi_{XS}$ ist ein entscheidender Vorteil der vorliegenden Erfindung. Da die Genauigkeitsanforderungen an die lateralen Positionswerte $\xi_{XS}$ im Allgemeinen um einen Faktor 10 höher sind als an die vertikalen Positionswerte $\xi_{ZS}$, muss sich die Wellenlängenstabilität der verwendeten Lichtquelle nur an den geringeren Anforderungen der vertikalen Messwerte orientieren. Eine genauere Betrachtung der Wellenlängenabhängigkeit der vertikalen Positionswerte $\xi_{ZS}$ zeigt, dass sie mit der eines üblichen Interferometers zur Positionsbestimmung entlang der Z-Achse vergleichbar ist. Zu berücksichtigen ist hier, dass der Messweg in Z-Richtung in der Regel mit typischerweise 1 mm sehr viel geringer ist als der zu erfassende Messweg in lateraler Richtung (>400 mm). Besonders vorteilhaft ist es, wenn die optischen Weglängen der beiden interferierenden Teilstrahlenbündel im Nennabstand $Z_0$ kompensiert sind (siehe unten). Nur bei abweichenden Abständen $Z=Z_0+\Delta Z$ treten dann Wellenlängenabhängigkeiten der erfassten Positionswerte auf, die aber vergleichsweise gering bleiben.

Auch die ggf. resultierenden Interpolationsfehler lassen sich im Rahmen der vorliegenden Erfindung einfach kompensieren. So führt eine reine laterale Bewegung der Maßverkörperung 10 entlang der X-Richtung ohne eine Bewegung in Z-Richtung zu einer Phasenverschiebung beider primärer Positionswerte $\xi_1$ und $\xi_2$. Innerhalb kurzer Messwege lassen sich daher vollständige Perioden der Signal- und/oder Interpolationsfehler aufnehmen, was eine Vorraussetzung für eine stabile Fehleranalyse ist. Die Analyse und Korrektur bzw. Kompensation der Interpolationsfehler der primären Positionswerte erfolgt über bekannte adaptive Verfahren. Nach der Korrektur und Verrechnung der beiden primären Positionswerte zu sekundären Positionswerten sind letztere ebenfalls ohne Interpolationsfehler. Das besondere dabei ist, dass (in X-Richtung) lokale Interpolationsfehler aufgrund der geneigten Empfindlichkeitsvektoren $\vec{a}_1$, $\vec{a}_2$ auch dann kompensiert werden können, wenn keine Bewegung in Z-Richtung vorliegt. Vorteilhafterweise werden die lateralen Messrichtungen (X, Y) der einzelnen Abtastsysteme 20.1, 20.2, 20.3 im Winkel zu den Hauptbewegungsrichtungen der jeweiligen Maschine ausgerichtet, in der die erfindungsgemäße Positionsmesseinrichtung eingesetzt wird und bei denen volle Genauigkeit gefordert wird. Sie können beispielsweise diagonal (Rz=45°) angeordnet sein.

Die für die Signalerzeugung wichtigen Beugungsordnungen der Maßverkörperung sind aufgrund der Spiegelsymmetrie für beide Gruppen von Signalen gleich. Vorteilhafterweise werden nur die +1. und -1. Beugungsordnungen verwendet. Die Beugungseffizienzen dieser Beugungsordnungen lassen sich leicht in bekannter Art und Weise durch die geeignete Wahl der Beugungsstruktur maximieren. Eine gleichzeitige Optimierung für weitere Sensoren mit ggf. anderen Abtastprinzipien und/oder anderer Wellenlängenabhängigkeit entfällt somit. Derartige Maßnahmen wären etwa nötig, wenn wie eingangs erläutert eine Kreuzgitter-Maßverkörperung in Verbindung mit einem Interferometer-basierten Abstandssensor eingesetzt würde. So würde in diesem Fall die Kreuzgitterabtastung hohe Beugungseffizienzen in den +1. und -1. Beugungsordnungen erfordern, während für die interferometrische Abstandsmessung eine optimierte 0. Beugungsordnung nötig wäre. Da hierbei ferner die Kreuzgittermaßverkörperung als Reflektor für das Abstands-Interferometer dient, wäre zudem eine - aufwändige - geeignete Auslegung desselben im Hinblick auf die verschiedenen genutzten Wellenlängen bei der Kreuzgitterabtastung und der interferometrischen Abstandsbestimmung nötig.

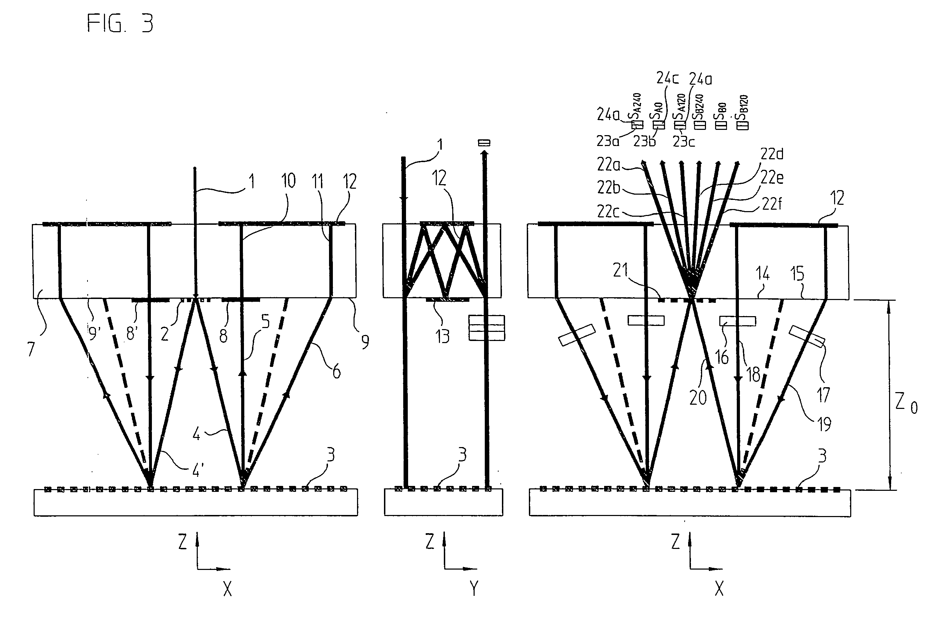

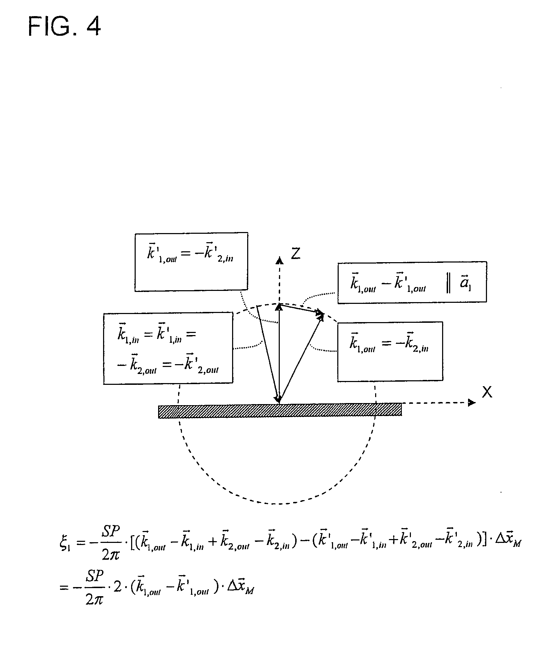

Nachfolgend sei nunmehr ein erstes Ausführungsbeispiel einer erfindungsgemäßen Positionsmesseinrichtung anhand der Figuren 3 und 4 erläutert. Figur 3 zeigt hierbei den Abtaststrahlengang dieses Ausführungsbeispiels in verschiedenen räumlichen Ansichten.

Ein von einer nicht dargestellten Lichtquelle her kommendes, einfallendes, linear polarisiertes Strahlenbündel 1 eines kollimierten Laserstrahls wird durch ein Aufspaltgitter 2 auf der Unterseite einer Abtastplatte 7 in eine +1. und -1. Beugungsordnung 4, 4' aufgespalten. Die Gitterkonstante des Aufspaltgitters 2 ist identisch zu derjenigen der Maßverkörperung 3. Das Strahlenbündel der +1. Beugungsordnung 4 des Aufspaltgitters 2 gelangt auf die Reflexions-Maßverkörperung 3 und wird dort durch Beugung in eine +1. und -1. Beugungsordnung in zwei Teilstrahlenbündel 5, 6 aufgespalten. Das in - 1. Beugungsordnung gebeugte Teilstrahlenbündel 5 gelangt parallel zur optischen Achse Z (d.h. in 0. resultierender Beugungsordnung) zurück in Richtung der Abtastplatte 7. Das in +1. Beugungsordnung abgelenkte Teilstrahlenbündel 6 propagiert in Richtung einer 2. resultierenden Beugungsordnung. Beide Teilstrahlenbündel 5, 6 gelangen auf diffraktive Ablenkstrukturen 8, 9 auf der Unterseite der Abtastplatte 7. Diese Ablenkstrukturen 8, 9 sind so dimensioniert, dass sie die austretenden Teilstrahlenbündel 10, 11 in der XZ-Ebene jeweils parallel zur Z-Richtung richten und in der YZ-Ebene seitlich ablenken und entsprechend einer Zylinderlinse fokussieren.

Das in 0-ter resultierender Beugungsordnung auftreffende Teilstrahlenbündel 5 wird durch einen Spiegel 12 auf der Oberseite der Abtastplatte 7 reflektiert und gelangt dann auf einen Spiegel 13 auf der Unterseite der Abtastplatte 7. Dort liegt auch der Fokusort der oben erwähnten, diffraktiven Ablenkstruktur 8 bzw. Zylinderlinse. Danach wird das Teilstrahlenbündel erneut durch den Spiegel 12 auf der Oberseite der Abtastplatte 7 reflektiert und gelangt auf eine zweite Ablenkstruktur 14 auf der Unterseite der Abtastplatte 7.

Das in +2. resultierender Beugungsordnung auf die Abtastplatte 7 treffende Teilstrahlenbündel 6 gelangt auf den Spiegel 12 auf ihrer Oberseite, wo auch der Fokusort des durchlaufenen Ablenkgitters 9 liegt. Nach der Reflexion gelangt es direkt auf eine zweite Ablenkstruktur 15 auf der Unterseite der Abtastplatte 7.

Die zweiten Ablenkstrukturen 14, 15 sind jeweils in Bezug auf die XZ-Ebene spiegelsymmetrisch zu den ersten Ablenkstrukturen 8, 9 und lenken daher die auftreffenden Teilstrahlenbündel seitlich in Y-Richtung versetzt aber gegenläufig zu den ursprünglich auf die Abtastplatte 7 treffenden Teilstrahlenbündeln 5, 6 zurück auf die Maßverkörperung 3. Bevor sie von der Maßverkörperung 3 erneut gebeugt werden, durchlaufen sie $\lambda/4$-Platten 16, 17, die für beide Teilstrahlenbündel 18, 19 unterschiedlich orientiert sind, so dass links- und rechtszirkular polarisierte Teilstrahlenbündel entstehen. An der Maßverkörperung 3 werden sie jeweils mit derselben Beugungsordnung wie beim ersten Auftreffen gebeugt, d.h. in +1. bzw. -1. Ordnung. Durch diese Beugung werden die beiden Teilstrahlenbündel 18, 19 als Strahlenbündel 20 parallel zurück zur Abtastplatte 7 geleitet. Sie durchlaufen dort ein Aufspaltgitter 21, welches die vereinten Teilstrahlenbündel in 3 Einzelstrahlen 22a, 22b, 22c spaltet; diese 3 Einzelstrahlen 22a, 22b, 22c durchtreten unterschiedlich orientierte Polarisatoren 23a, 23b, 23c bevor sie durch Detektoren 24a, 24b, 24c erfasst und in elektrische Signale $S_{A0°}$, $S_{A120°}$, $S_{A240°}$ umgewandelt werden. Die drei Polarisatoren 23a, 23b, 23c stehen in einem Winkelraster von 60°, so dass Signale $S_{A0°}$, $S_{A120°}$, $S_{A240°}$ mit einer Phasenverschiebung von 120° zueinander resultieren.

Das in 2.ter resultierender Beugungsordnung auf die Abtastplatte 7 treffende Teilstrahlenbündel 6 muss zwischen der Abtastplatte 7 und der Maßverkörperung 3 längere optische Wege durchlaufen, als das Teilstrahlenbündel 5 in 0. resultierender Beugungsordnung. Um diese Wegunterschiede auszugleichen, sind in der YZ-Ebene unterschiedliche Strahlwege innerhalb der Abtastplatte 7 vorgesehen, nämlich in Form der oben beschriebenen dreifachen Reflexion des einen und der einfachen Reflexion des anderen Teilstrahlenbündels. Bei geeigneter Dimensionierung der Abtastplattendicke und der Ablenkgitter 8, 9, 14, 15 lassen sich die Weglängenunterschiede im Nennabstand $Z_0$ eliminieren.

Das vom ersten Aufspaltgitter in -1. Beugungsordnung abgelenkte Strahlenbündel 4' wird bzgl. der YZ-Ebene spiegelsymmetrisch durch entsprechend spiegelsymmetrisch angeordnete Ablenkgitter 8', 9' auf der Abtastplatte 7 aufgespalten und wieder vereint. Es entstehen daraus die Signale $S_{B0°}$, $S_{B120°}$, $S_{B240°}$.

Aus jeder Gruppe phasenverschobener Signale $S_{A0°}$, $S_{A120°}$, $S_{A240°}$ bzw. $S_{B0°}$, $S_{B120°}$, $S_{B240°}$ wird in bekannter Weise ein Positionswert berechnet. Es resultieren daraus die oben erwähnten, primären Positionswerte $\xi_1$ und $\xi_2$. Die Berechnung der Positionswerte $\xi_1$ und $\xi_2$ kann eine entsprechende Kompensation von Interpolationsfehlern mit einschließen. Die Bestimmung des Empfindlichkeitsvektors $\vec{a}_1$ kann für das erläuterte Beispiel der Figur 4 entnommen werden. Er ist wie gefordert gegenüber der X-Richtung verkippt.

Bei einer verwendeten Wellenlänger $\lambda = 0{,}78\mu m$ und einer Maßverkörperungs-Gitterkonstante d = $2{,}048\mu m$ ergibt sich für diese Ausführungsform eine laterale Signalperiode $SP_X = 0{,}512\mu m$ und eine vertikale Signalperiode $SP_Z$ = 1,1 $\mu m$.

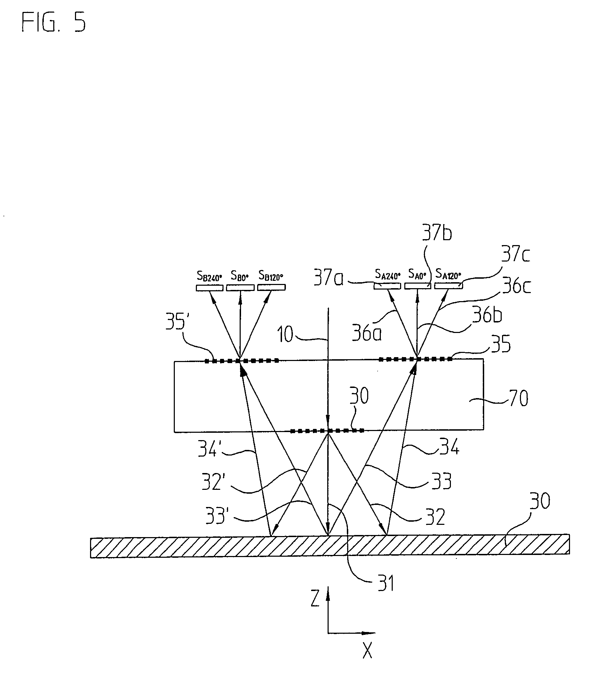

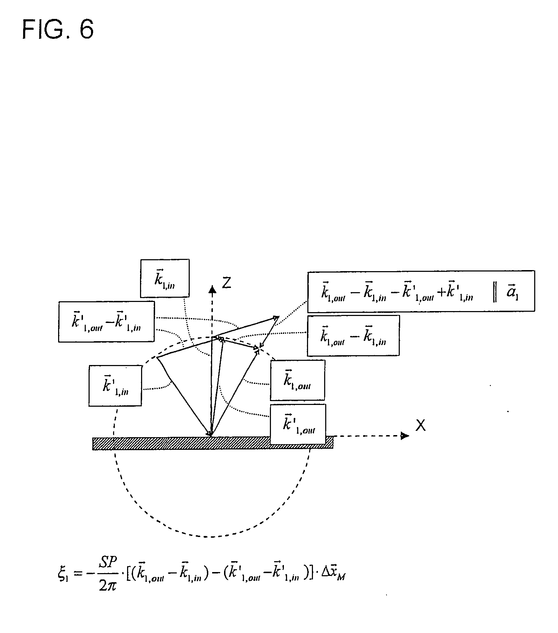

Ein zweites Ausführungsbeispiel der erfindungsgemäßen Positionsmesseinrichtung sei nachfolgend anhand der Figuren 5 und 6 erläutert.

In dieser Variante wird das z.B. aus der EP 0 163 362 A1 bekannte Dreigitterprinzip interferentieller Positionsmesseinrichtungen erfindungsgemäß modifiziert, wie dies etwa in der schematischen Darstellung der Figur 5 ersichtlich ist.

Ein erstes Aufspaltgitter 30 auf der Unterseite einer Abtastplatte 70 spaltet ein kollimiertes Lichtbündel 10 einer - nicht dargestellten - Laserdiode in drei Teilstrahlenbündel 31, 32, 32' (0., +1. und -1. Beugungsordnung) auf. Die Teilstrahlenbündel 32, 31 in +1. und 0. Beugungsordnung bilden zwei erste Teilstrahlenbündel zur Erzeugung des ersten primären Positionswertes. Spiegelsymmetrisch dazu liefern die Teilstrahlenbündel 31 , 32' in 0. und -1. Beugungsordnung die zweiten Teilstrahlenbündel für den zweiten primären Positionswert.

Die Teilstrahlenbündel 32, 31 in +1. und 0. Beugungsordnung werden an der Reflexionsmaßverkörperung 30 in -1. bzw. +1. Beugungsordnung abgelenkt, so dass sich die in diesen Raumrichtungen ausbreitenden Teilstrahlenbündel 34, 33 dann sich auf der Oberseite der Abtastplatte 70 überlagern, die dort ein geeignetes Mischgitter 35 aufweist. Derartige Mischgitter 35 sind etwa aus der EP 0 163 362 A1 bekannt und erzeugen drei resultierende Strahlenbündel 36a, 36b, 36c mit einer Phasenverschiebung von $\pm 120°$. Diese Strahlenbündel 36a, 36b, 36c werden durch Photodetektoren 37a, 37b, 37c in (Strom-) Signale $S_{A240°}$, $S_{A0°}$, $S_{A120°}$ gewandelt und in bekannter Weise zu ersten primären Positionswerten $\xi_1$ ausgewertet.

Die spiegelsymmetrischen zweiten Teilstrahlbündel 31, 32' liefern analog hierzu die Signale $S_{B0°}$, $S_{B120°}$, $S_{B240°}$ bzw. den zweiten primären Positionswert $\xi_2$.

Die Gitterkonstante $d_{A2}$ der jeweils zweiten Abtastgitter 35, 35' ist gemäß der nachfolgenden Beziehung so gewählt, dass jeweils beide Teilstrahlbündel 33, 34 bzw. 33', 34' in gleiche Richtungen gelenkt werden und miteinander interferieren können:

$$\frac{1}{d_{A2}} = \frac{2}{d_M} - \frac{1}{d_{A1}}$$

mit

$d_{A1}$ := Gitterkonstante des ersten Abtastgitters,
$d_{A2}$ := Gitterkonstante des zweiten Abtastgitters,
$d_M$ := Gitterkonstante der Maßverkörperung.

Der Empfindlichkeitsvektor des ersten primären Positionswerts $\xi_1$ ist für diese Ausführungsform in Figur 6 dargestellt. Der entsprechende Empfindlichkeitsvektor des zweiten primären Positionswertes ist konstruktionsbedingt wiederum spiegelsymmetrisch hierzu orientiert.

Nachfolgend seien abschließend noch diverse optionale Ausgestaltungsmöglichkeiten in Verbindung mit der vorliegenden Erfindung aufgezählt. Die verschiedenen Maßnahmen können zusätzlich und/oder alternativ umgesetzt werden.

So können etwa auch beliebige asymmetrische Abtaststrahlengänge verwendet werden, die einen ersten primären Positionswert liefern. Hierbei kann der Strahlenverlauf gespiegelt werden als auch alle beteiligten Komponenten zur Erzeugung des zweiten primären Positionswertes gespiegelt angeordnet werden.

Eine Erzeugung phasenverschobener Signale ist über diverse bekannte Methoden möglich. So können etwa verschiedene Polarisationsauswertungen zum Einsatz kommen, eine Vernierstreifenerzeugung mit Streifendetektion mittels strukturierter Photosensoren vorgesehen werden oder aber eine direkte Erzeugung der phasenverschobenen Signale mit Abtastgittern gemäß der oben erwähnten EP 163 362 A1 erfolgen.

Der erwähnte Ausgleich der optischen Weglängen beider interferierender Teilstrahlbündel im Nennabstand kann ebenso auf andere Art und Weise als oben erläutert erfolgen. So kann z.B. eine grds. unterschiedliche Strahlführung ähnlich zum obigen ersten Ausführungsbeispiel vorgesehen werden. Es können Ausgleichsglasplatten im zunächst kürzeren Teilstrahlengang angeordnet werden. Ferner ist ein derartiger Weglängenausgleich auch durch polarisationsoptische Bauteile entsprechender Dicke möglich; hierbei können diese demzufolge eine Doppelfunktion übernehmen.

Als Lichtquellen kommen unterschiedlichste Varianten von Lichtquellen für die erfindungsgemäße Positionsmesseinrichtung in Frage, etwa kohärente Lichtquellen wie Streifenleiter-Laserdioden, VCSEL-Lichtquellen oder HeNe-Laser.

Es ist zudem möglich unterschiedliche Kollimationszustände der Beleuchtung vorzusehen, wie etwa kollimierte Strahlbündel (gemäß den beiden oben erläuterten Ausführungsformen) oder aber divergente bzw. konvergente Strahlbündel.

Es ist zudem möglich, eine einzige Auswerteelektronik für beide Positionswertbestimmungen einzusetzen, wobei eine parallele Positionswertbestimmung durch zweifachen Schaltungsaufbau erfolgen kann oder aber eine serielle Positionswertbestimmung mit Zwischenspeicherung von Signalwerten in z.B. Sample&Hold-Gliedern erfolgen kann.

Im Rahmen der vorliegenden Erfindung gibt es demzufolge neben den oben erläuterten Beispielen eine Reihe weiterer Ausführungsmöglichkeiten.

**Patentansprüche**

1. Positionsmesseinrichtung zur Erfassung der Position von zwei relativ zueinander beweglichen Objekten mit

- einer Maßverkörperung (3, 30), die mit einem der beiden Objekte verbunden ist sowie
- mindestens einem Abtastsystem (20.1, 20.2, 20.3) zur Abtastung der Maßverkörperung (3, 30), das mit dem anderen der beiden Objekte verbunden ist,

**dadurch gekennzeichnet, dass**

- das Abtastsystem (20.1, 20.2, 20.3) derart ausgebildet ist, dass darüber eine gleichzeitige Positionswertbestimmung entlang mindestens einer lateralen (X, Y) als auch entlang einer vertikalen (Z) Verschiebungsrichtung der Objekte möglich ist und
- wobei auf Seiten des Abtastsystems (20.1, 20.2, 20.3) zur Positionsbestimmung in lateraler (X, Y) und vertikaler (Z) Verschiebungsrichtung ein erster und ein zweiter Abtaststrahlengang ausgebildet ist, wobei jeder Abtaststrahlengang jeweils aus zwei nicht-spiegelsymmetrischen, interferierenden Teilstrahlenbündeln ausgebildet ist, aus denen ausgangsseitig eine Gruppe phasenverschobener Signale ($S_{A0°}$, $S_{A120°}$, $S_{A240°}$, $S_{B0°}$, $S_{B120°}$, $S_{B240°}$) erzeugbar ist, wobei die beiden interferierenden Teilstrahlenbündel jedes Abtaststrahlenganges asymmetrisch zu einer Ebene (YZ) senkrecht zur lateralen Verschiebungsrichtung (X) verlaufen.

2. Positionsmesseinrichtung nach Anspruch 1, **dadurch gekennzeichnet, dass**

- der zweite Strahlengang spiegelsymmetrisch zum ersten Strahlengang bzgl. einer Ebene (YZ) senkrecht zur lateralen Verschiebungsrichtung verläuft,
- die beiden Teilstrahlenbündel jedes Abtaststrahlenganges an der Maßverkörperung (3, 30) eine Beugung in unterschiedlichen Beugungsordnungen erfahren.

3. Positionsmesseinrichtung nach Anspruch 2, **dadurch gekennzeichnet, dass** ferner Auswertemittel vorgesehen sind, um aus interpolierten phasenverschobenen Signalen beider Gruppen primäre Positionswerte zu bestimmen, aus denen ein lateraler (X) und ein vertikaler (Z) Positionswert ermittelbar ist.

4. Positionsmesseinrichtung nach Anspruch 3, **dadurch gekennzeichnet, dass** ferner Kompensationsmittel vorgesehen sind, um eventuelle Interpolationsfehler der primären Positionswerte zu kompensieren, aus denen ein lateraler und ein vertikaler Positionswert ermittelbar ist.

5. Positionsmesseinrichtung nach Anspruch 1, **dadurch gekennzeichnet, dass** in den jeweiligen Abtaststrahlengängen optische Mittel angeordnet sind, um jeweils gleiche optische Weglängen für die interferierenden Teilstrahlenbündel zu gewährleisten.

6. Positionsmesseinrichtung nach Anspruch 2, **dadurch gekennzeichnet, dass** die beiden Teilstrahlenbündel jedes Abtaststrahlenganges an der Maßverkörperung (3, 30) eine Beugung in +.1 bzw. - 1. Beugungsordnung erfahren.

7. Positionsmesseinrichtung nach mindestens einem der vorhergehenden Ansprüche, **dadurch gekennzeichnet, dass** die Maßverkörperung (3, 30) ein zweidimensionales Kreuzgitter umfasst und drei Abtastsysteme (20.1, 20.2, 20.3) vorgesehen sind, die zueinander in nicht-kolinearer Anordnung stehen, um aus den verknüpften Positionswerten der drei Abtastsysteme (20.1, 20.2, 20.3) die Bewegung der beiden Objekte in allen sechs räumlichen Freiheitsgraden zu erfassen.

8. Positionsmesseinrichtung nach Anspruch 7, **dadurch gekennzeichnet, dass** die beiden Objekte Komponenten einer Halbleiterfertigungseinrichtung sind.

**Claims**

1. Position measuring device for detecting the position of two objects that are movable relative to one another, comprising

- a material measure (3, 30), which is connected to one of the two objects, and
- at least one scanning system (20.1, 20.2, 20.3) for scanning the material measure (3, 30), which is connected to the other of the two objects,

**characterized in that**

- the scanning system (20.1, 20.2, 20.3) is embodied in such a way that a simultaneous position value determination along at least one lateral (X, Y) and along a vertical (Z) displacement direction of the objects is possible by means of said scanning system, and

- wherein a first and a second scanning beam path are formed on the part of the scanning system (20.1, 20.2, 20.3) for position determination in lateral (X, Y) and vertical (Z) displacement directions, wherein each scanning beam path is formed in each case from two non-mirror-symmetrical, interfering partial beams, from which a group of phase-shifted signals ($S_{A0°}$, $S_{A120°}$, $S_{A240°}$, $S_{B0°}$, $S_{B120°}$, $S_{B240°}$) can be generated on the output side, wherein the two interfering partial beams of each scanning beam path proceed asymmetrically with respect to a plane (YZ) perpendicular to the lateral displacement direction (X).

2. Position measuring device according to Claim 1, **characterized in that**

- the second beam path proceeds mirror-symmetrically with respect to the first beam path relative to a plane (YZ) perpendicular to the lateral displacement direction,
- the two partial beams of each scanning beam path experience a diffraction in different orders of diffraction at the material measure (3, 30).

3. Position measuring device according to Claim 2, **characterized in that** evaluation means are furthermore provided in order to determine primary position values from interpolated phase-shifted signals of both groups, from which primary position values a lateral (X) and a vertical (Z) position value can be ascertained.

4. Position measuring device according to Claim 3, **characterized in that** compensation means are furthermore provided in order to compensate for possible interpolation errors of the primary position values from which a lateral and a vertical position value can be ascertained.

5. Position measuring device according to Claim 1, **characterized in that** optical means are arranged in the respective scanning beam paths in order to ensure in each case identical optical path lengths for the interfering partial beams.

6. Position measuring device according to Claim 2, **characterized in that** the two partial beams of each scanning beam path experience a diffraction in +1st and respectively -1st diffraction orders at the material measure (3, 30).

7. Position measuring device according to at least one of the preceding claims, **characterized in that** the material measure (3, 30) comprises a two-dimensional cross grating and three scanning systems (20.1, 20.2, 20.3) are provided, which are situated in a non-collinear arrangement with respect to one another in order to detect the movement of the two objects in all 5 six spatial degrees of freedom from the combined position values of the three scanning systems (20.1, 20.2, 20.3).

8. Position measuring device according to Claim 7, 10 **characterized in that** the two objects are components of a semiconductor fabrication device.

**Revendications**

1. Dispositif de mesure de position destiné à saisir la position de deux objets mobiles l'un par rapport à l'autre et présentant

un ensemble de mesure (3, 30) relié à l'un des deux objets et

au moins un système de palpage (20.1, 20.2, 20.3) qui palpe l'ensemble de mesure (3, 30) et qui est relié à l'autre des deux objets,

**caractérisé en ce que**

le système de palpage (20.1, 20.2, 20.3) est configuré de manière à permettre une détermination simultanée de valeurs de position dans au moins une direction latérale de déplacement (X, Y) et dans une direction verticale de déplacement (Z),

un premier et un deuxième parcours de rayons étant formés sur les côtés du système de palpage (20.1, 20.2, 20.3) pour déterminer la position dans les directions latérales de déplacement (X, Y) et dans la direction verticale de déplacement (Z),

chaque parcours de rayons de palpage étant formé de deux faisceaux partiels non symétriques et en interférence mutuelle, permettant de former à la sortie un ensemble de signaux déphasés ($S_{A0°}$, $S_{A120°}$, $S_{A240°}$, $S_{B0°}$, $S_{B120°}$, $S_{B240°}$), les deux faisceaux partiels en interférence de chaque parcours de rayons de palpage s'étendant symétriquement par rapport à un plan (XZ) perpendiculaire à la direction latérale de déplacement (X).

**2.** Dispositif de mesure de position selon la revendication 1, **caractérisé en ce que** le deuxième parcours de rayons est symétrique du premier parcours de rayons par rapport à un plan (YZ) perpendiculaire à la direction latérale de déplacement et **en ce que** les deux faisceaux partiels de chaque parcours de rayons de palpage subissent sur l'ensemble de mesure (3, 30) une réfraction dans différents ordres de réfraction.

**3.** Dispositif de mesure de position selon la revendication 2, **caractérisé en ce qu'**il présente en outre des moyens d'évaluation qui permettent de déterminer à partir des signaux déphasés interpolés des deux ensembles des valeurs primaires de position à partir desquelles une valeur de position latérale (X) et une valeur de position verticale (Z) peuvent être déterminées.

**4.** Dispositif de mesure de position selon la revendication 3, **caractérisé en ce qu'**il présente en outre des moyens de compensation qui compensent d'éventuelles erreurs d'interpolation des valeurs primaires de position à partir desquelles une valeur de position latérale et une valeur de position verticale peuvent être déterminées.

**5.** Dispositif de mesure de position selon la revendication 1, **caractérisé en ce que** dans chacun des parcours de rayons de palpage, des moyens optiques sont disposés pour garantir toujours les mêmes longueurs de parcours optique aux faisceaux partiels en interférence.

**6.** Dispositif de mesure de position selon la revendication 2, **caractérisé en ce que** les deux faisceaux partiels de chaque parcours de rayons de palpage subissent sur l'ensemble de mesure (3, 30) une réfraction d'ordre +1 ou -1.

**7.** Dispositif de mesure de position selon au moins l'une des revendications précédentes, **caractérisé en ce que** l'ensemble de mesure (3, 30) comporte une grille croisée bidimensionnelle et **en ce que** trois systèmes de palpage (20.1, 20.2, 20.3) sont prévus et sont agencés de manière non colinéaire les uns par rapport aux autres pour saisir à partir des valeurs de position associées des trois systèmes de palpage (20.1, 20.2, 20.3) le déplacement des deux objets dans les six degrés de liberté spatiale.

**8.** Dispositif de mesure de position selon la revendication 7, **caractérisé en ce que** les deux objets sont des composants d'un Dispositif de fabrication de semi-conducteurs.

FIG. 1

# FIG. 2

$$\xi_X = \xi_{X1}$$
$$\xi_Y = \xi_{Y1}$$
$$\xi_Z = \xi_{Z1}$$
$$\xi_{RX} = \eta_{RX} \cdot (\xi_{Z2} - \xi_{Z1})$$
$$\xi_{RY} = \eta_{RY} \cdot (\xi_{Z1} - \xi_{Z3})$$
$$\xi_{RZ} = \eta_{RZ} \cdot (\xi_{X2} - \xi_{X1})$$

FIG. 3

# FIG. 4

$$\xi_1 = -\frac{SP}{2\pi} \cdot [(\vec{k}_{1,out} - \vec{k}_{1,in} + \vec{k}_{2,out} - \vec{k}_{2,in}) - (\vec{k}'_{1,out} - \vec{k}'_{1,in} + \vec{k}'_{2,out} - \vec{k}'_{2,in})] \cdot \Delta\vec{x}_M$$

$$= -\frac{SP}{2\pi} \cdot 2 \cdot (\vec{k}_{1,out} - \vec{k}'_{1,out}) \cdot \Delta\vec{x}_M$$

FIG. 5

FIG. 6

$$\xi_1 = -\frac{SP}{2\pi} \cdot [(\vec{k}_{1,out} - \vec{k}_{1,in}) - (\vec{k'}_{1,out} - \vec{k'}_{1,in})] \cdot \Delta \vec{x}_M$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1019669 B1
- EP 448982 B1
- EP 0163362 A1
- EP 163362 A1